Europäisches Patentamt

(19) European Patent Office

Office européen des brevets

(11) Publication number: **0 069 084**
**B1**

(12) **EUROPEAN PATENT SPECIFICATION**

(45) Date of publication of patent specification: **16.09.87**

(21) Application number: **82830159.8**

(22) Date of filing: **07.06.82**

(51) Int. Cl.⁴: **G 01 S 7/38, G 01 S 7/02**

(54) **Device for estimating the scanning frequency of a conical scanning tracking radar signal.**

(30) Priority: **25.06.81 IT 4876281**

(43) Date of publication of application:
**05.01.83 Bulletin 83/01**

(45) Publication of the grant of the patent:
**16.09.87 Bulletin 87/38**

(84) Designated Contracting States:
**DE FR GB NL SE**

(56) References cited:
**FR-A-2 409 522**
**US-A-3 504 366**
**US-A-3 896 438**
**US-A-4 037 227**

(73) Proprietor: **SELENIA INDUSTRIE**
**ELETTRONICHE ASSOCIATE S.p.A.**
**Via Tiburtina, KM 12.400**
**I-00131 Roma (IT)**

(72) Inventor: **Giubbolini, Marco**
**Via Belcastro 26**
**I-00173 Roma (IT)**
Inventor: **Marziali, Valter**
**Via Gaetano Casati 38**
**I-00154 Roma (IT)**

(74) Representative: **Gustorf, Gerhard, Dipl.-Ing.**
**Mühlenstrasse 1**
**D-8300 Landshut (DE)**

Courier Press, Leamington Spa, England.

**Description**

The invention refers to a device for estimating the scanning frequency of a radar signal, according to the opening part of claim 1.

In the field of electronic warfare the problem arises of the measurement of the scanning frequency "$f_s$" of a conical scanning tracking radar. The measurement of the frequency $f_s$ of a radar of this type is necessary both in the passive systems of electronic warfare, whose purpose is to measure and collect the characteristic parameters of radars present in the surrounding environment, and in the active systems mounted on platforms (aircraft, ships, helicopters), which require to know $f_s$ to disturb the angular tracking of a conical scanning radar.

The efficiency of the interference, the effect of which is the loss of the angular tracking, depends above all on the accuracy with which $f_s$ has been measured in the first place i.e. the more accurate the estimate of $f_s$, the more effective the generated interference will be and therefore the better the invisibility to the radar. In quantitive terms, a precision of the order of one herz is required in a frequency band of 30 to 300 Hz, which is the frequency spectrum typical of conical scanning radars.

The techniques previously used for the measurement of $f_s$ are essentially of two types: a passive technique which makes use of a bank of phaselock loops (PLL) tuned to a set of discrete frequencies distributed in the interval of interest (30—300) Hz; and an active technique that utilizes the retransmission to the radar of a signal at the same frequency as the radar carrier with an amplitude modulation imposed at a linearly increasing frequency in the interval of uncertainty of the radar $f_s$.

With the first technique, used for the realization of an $f_s$ estimater, the value of $f_s$ is obtained by selecting from the locked PPL the one at the lowest frequency and measuring its relative period. The choice of the lowest frequency is governed by the presence of harmonics on the signal for which in every case we wish to take the fundamental. The accuracy of the frequency measurement is such as to contain the RMS error within the interval between 1 and 2 Hz (the error being dependent on the measured frequency).

With the second technique, when the frequency of the modulation present on the retransmitted signal coincides, within an error of the order of half hertz, with the radar $f_s$, there is an appreciable angular error in the pointing of the antenna indicated by the sudden increase the depth of modulation present on the signal produced by the radar. The frequency sweep velocity must be sufficiently low to produce an appreciable angular error; typically this velocity is of the order of 0.5 Hz/S. The slowness of sweep limits the use of the active technique to those cases in which the interval of uncertainty which contains the frequency $f_s$ is sufficiently narrow (4—5 Hz) since the measurement must be completed in operationally acceptable times (at maximum about 10 seconds). The two systems described, passive and active, on account of their mentioned characteristics are particularly suited in those situations in which we have respectively:

—no *a priori* knowledge of the frequency $f_s$

—a fairly precise *a priori* knowledge but not sufficient to actuate an immediate interference.

In general the active techniques coexist with other passive techniques where a reduction of the measurement error is necessary. The limitations and disadvantages of the techniques described above lie principally in the inconvenient size of the equipment necessary and the performance not always adequate for the requirements of accuracy.

The object of this invention is to overcome the disadvantages and improve the performance in determining the $f_s$ of the conical scanning tracking radar.

The object is met by the device as defined in the appended claims; by realising an optimum estimator in accordance with the criteria of maximum *a posteriori* probability and maximum likelihood and by applying a suitable Fourier discrete transform algorithm.

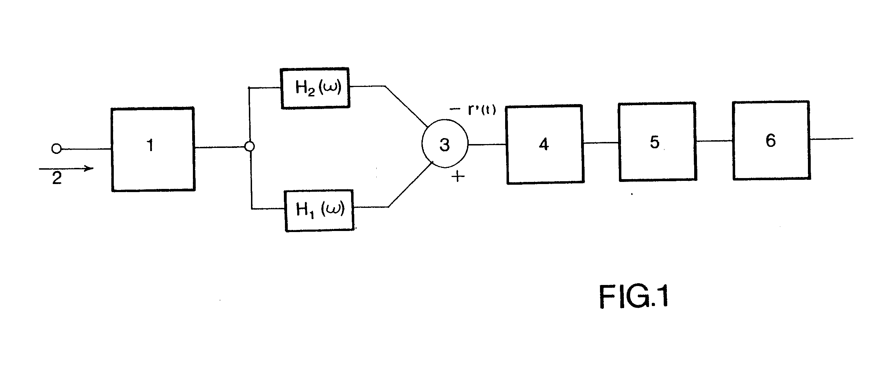

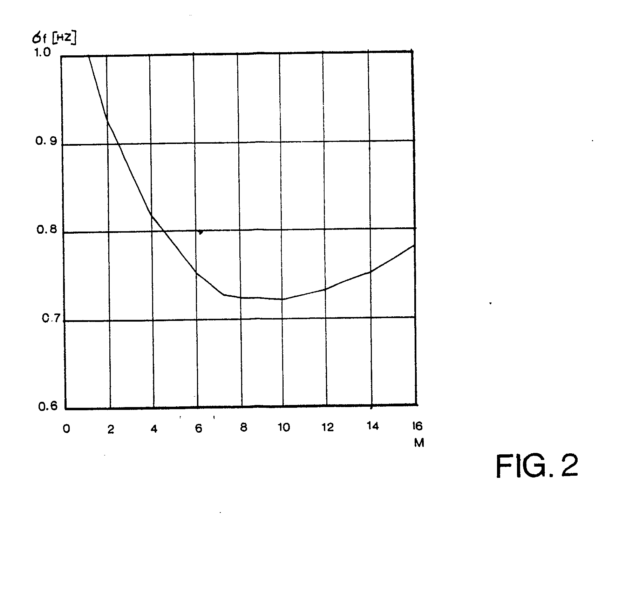

The invention will now be described in detail with reference to the figures in which: Figure 1 is a block diagram of the device of this invention; and Figure 2 is a diagram exemplifying the behaviour of the statistical parameter of standard deviation of the estimator device. With reference to Figure 1 the levels of the pulses emitted by the radar at the repetition frequency of the radar itself are fed into the input of the device, as shown by arrow 2. These signals are filtered by a sampler with memory (1) whose output is fed to the input of two filters of which the first $H_1 (\omega)$ limits the spectrum of interest (0—300 Hz) while the second $H_2 (\omega)$ isolates the continuous component. A suitable device (3) subtracts the continous component so that the signal which originally amplitude modulated the train of pulses emitted by the radar remains. A number $N=2^9=512$ samples of this signal ($r' (t)$ in Figure 1) are taken at a sampling frequency $f_c=1/Tc$ equal to 600 Hz so as to be able to observe the spectrum from 0 to 300 Hz, by means of the device shown at (4). The signal to noise ratio envisaged at the input of the sampler (4), under the most unfavourable operating conditions is about 2,57 dB. The string of numerical samples of the signal $r' (t)$ is fed to an analogue to digital converter (5) to be transformed into a string of processed numerical samples by the following device (6) made up of a circuit which calculates the $a_n$ coefficient of the Fourier discrete transform of the sampled $r' (t)$ signal, with a suitably chosen FFT algorithm. The general coefficient $a_n=a_{n,r}+1a_{n,I}$ corresponds to the complex amplitude of the spectrum row at frequency $f_n=n/NTc$. Since the spectrum is symmetrical, the calculation of $512/_2=256$ coefficients, which are collected in a vector with 512 components containing the respective real and imaginary parts, is sufficient. The appropriate search algorithm selects the index K corresponding to which the sum of the absolute values of the real and imaginary components

$$bK = /ar,k/ + /ai,k/$$

is maximum.

Finally from the value of K thus obtained the value of the estimated frequency is calculated with the following interpolation formula:

$$\hat{f}_s = \frac{K+\delta}{NTc}$$

where

$$\delta = \frac{\sum_{m-1}^{M} [b_m - b_{(-m)}]m}{\sum_{m-1}^{M} [b_m - b_{(-m)}]} \qquad (1)$$

$$(2)$$

is an estimate of the maximum centre point between the rows at the sides of the row $AB_K$. The coefficients $b_{(m)}$ and $b_{(-m)}$ which appear in the expression of S are relative, respectively, to row A right and A left of the row K. The accuracy of the estimate of the conical scanning frequency expressible with the standard deviation $\delta_f$ of the estimator (1) depends on the following causes of error:

1) there is a component of thermal noise superimposed on the useful signal r' (t) which can be assumed to be approximately at constant spectral density (the so-called white noise) in the band (0—300) Hz.

2) The useful signal is not a sinewave of unvarying amplitude and phase in the measurement period but a sinewave modulated in phase and with amplitude variable in time. These deformations in the useful signal are principally determined by variations of the radar cross section of the target which provoke tracking errors and consequently fluctuations in the amplitude and phase of the useful signal (so called GLINT).

3) Some of the pulses transmitted by the radar can be lost if the sampler reading window is opened, through estimating errors, at a position such that the pulse falls before the opening or after the closing of this window.

4) In conditions of particularly high density traffic the reading of spurious pulses may occur due to the superpositioning of true pulses with pulses of other radar temporarily coincident.

The behaviour of $\delta_f$ as a function of the number of rows weighed by the centre-point estimator is shown in Figure 2.

The performance relates to a signal-to-noise ratio equal to 2.57 dB and a GLINT bandwidth (at −3 dB) of 1 Hz.

The interval of measurable frequency extends from 30 to 285 Hz.

The results show that the optimum value of the number of rows M weighed by the estimator (2) is equal to 10 (per part at the sides of the maximum row) in the case of GLINT with a 1 Hz bandwidth and is linked to the value of this bandwidth.

The entity of the error is about 0.72 Hz which may be considered satisfactory for the system where the measurement channel is implemented. The reaction time of the circuit is determined by the observation time, equal to 0,85 seconds, necessary for the acquisition of the 512 time samples of the radar signal and the computer processing time, about 1 second, necessary for the calculation of the FFT and the processing of the spectrum samples, for a total of about 2 seconds.

A comparison between the technique used in the invention and previous techniques has to be made with the known passive system.

The comparison results in a factor of 1.3—2.5 for the performance and a factor of 2 (8 if the FFT estimator does not use a dedicated processor, i.e. when it is used on systems where there already exists a calculating resource for other purposes) for the size, both to the advantage of the FFT system.

The reaction times for both the systems are of the order of 2 seconds. The invention is realizable on a microcircuit e.g., a multilayer microcircuit, which controls all the logical operations of processing and data processing for the recognition and measurement of the radar parameters, and selection and implementation of the interference.

The FFT algorithm used which is of the parallelized type in base four is specially studied to exploit to the maximum the possibilities of multiprogramming.

The invention is utilized for the measurement of the conical scanning frequency $f_s$ of pointing radars, necessary to perform a particular technique of interference which goes under the names of "INVERSE GAIN". The "INVERSE GAIN" technique is realized by modulating the envelope of the interference pulses with a signal equal in frequency to that of the radar conical scanning but with the phase inverted with respect to that of the radar signal.

The success of the maneouver, and the consequent loss of pointing on the part of the radar, is linked to the precision with which the conical scanning frequency of the victim radar is known.

The error must be kept less than the bandwidth of the antenna servo-system. Besides this specific application, the invention can be conveniently utilized in all systems dedicated to electronic warfare support measurements.

These systems, which develop passive operations of interception, localization, registration and analysis of electromagnetic emissions, furnish tactical support information in real time for action directed towards reducing the efficiency of the enemy's weapons.

## Claims

1. Device for estimating the scanning frequency of the signal of a conical scanning tracking radar, characterized by:
—a sampler (1) with a memory to which the train of pulses received from the tracking radar at its scanning frequency are fed;
—a pair of filters ($H_1(\omega)$, $H_2(\omega)$) connected to the output of the sampler, of which the first isolates the spectrum of interest while the second isolates the continuous component;
—a device (3) which combines the filter outputs thereby to eliminate the continuous component from the spectrum of interest and provide at its output a signal at the scanning frequency of the tracking radar;
—a sampler (4) which selects from the output of the combining device a sufficient number of samples to be able to observe the typical spectrum of interest;
—an analogue-to-digital converter (5) which transforms the train of signals sampled at the input into a string of numerical samples; and
—a computing device 6, which performs a Fast-Fourier-Transform on the samples and applies the resulting coefficient to an algorithm which furnishes the required estimate of the scanning frequency.

2. Device according to claim 1, characterized by a multilayer microcircuit which automatically performs the calculation of the coefficients of the Fourier transform (FFT) of the sampled signal and applies to them a suitable algorithm furnishing the required estimate of the scanning frequency.

## Patentansprüche

1. Anordnung zum Abschätzen der Abtastfrequenz des Signals eines Zielverfolgungsradars mit konischer Abtastung, gekennzeichnet durch:
—einen Abtaster (1) mit einem Speicher, dem der Impulszug von dem Zeilverfolgungsradar mit seiner Abtastfrequenz zugeführt wird;
—ein Paar Filter ($H_1(\omega)$, $H_2(\omega)$), die an den Ausgang des Abtasters angeschlossen sind und von denen das erste das interessierende Spektrum separiert, während das zweite den Gleichanteil separiert;
—eine Einrichtung, die die Filter-Ausgangssignale kombiniert, um dadurch den Gleichanteil aus dem interessierenden Spektrum zu beseitigen und an ihrem Ausgang ein Signal mit der Abtastfrequenz des Zielverfolgungsradars bereitzustellen;
—einen Abtaster (4), der aus dem Ausgangssignal der Kombiniereinrichtung eine Anzahl von Abtastwerten auswählt, die ausreicht, um das typische interessierende Spektrum zu beobachten;
—einen Analog-Digital-Umsetzer (5), der den am Eingang abgetasteten Signalzug in eine Kette von numerischen Abtastwerten umsetzt, und
—eine Recheneinrichtung (6), die die Abtastwerte einer schnellen Fouriertransformation unterwirft und die sich ergebenden Koeffizienten mit einem Algortihmus behandelt, der die gewünschte Anschätzung der Abtastfrequenz liefert.

2. Anordnung nach Anspruch 1, gekennzeichnet durch einen Mehrschicht-Mikroschaltkreis, der die Berechnung der Koeffizienten der Fouriertransformation (FFD) des abgetasteten Signals automatisch durchführt und die Koeffizienten einem geeigneten Algorithmus unterwirft, welcher die gewünschte Abschätzung der Abtastfrequenz liefert.

## Revendications

1. Dispositif pour l'estimation de la fréquence de balayage du signal d'un radar de poursuite à balayage conique, caractérisé par:
—un échantillonneur (1) avec une mémoire dans laquelle est introduit le train d'impulsion émis par le radar de poursuite à sa fréquence de balayage;
—une paire de filtres ($H_1(\omega)$, $H_2(\omega)$) reliée à la sortie de l'échantillonneur, dont le premier isole le spectre d'intérêt, tandis que le second isole la composante continue;
—un dispositif (3) qui combine les signaux de sortie des filtres, afin d'éliminer ainsi la composante continue du spectre d'intérêt et produire à sa sortie un signal ayant la fréquence de balayage du radar de poursuite;
—un échantillonneur (4) qui sélectionne, parmi les signaux de sortie du dispositif de combinaison, un nombre suffisant d'échantillons pour pouvoir observer le spectre d'intérêt caractéristique;
—un convertisseur analogique-numérique (5) qui transforme le train de signaux échantillonnés à l'entrée en une chaîne d'échantillons numériques; et
—un dispositif calculateur (6) qui effectue une transformation de Fourier rapide des échantillons et applique les coefficients obtenus à un algorithme qui fournit l'estimation souhaitée de la fréquence de balayage.

2. Dispositif selon la revendication 1, caractérisé par un microcircuit multicouches qui effectue automatiquement le calcul des coefficients de la transformation de Fourier (FFT) du signal échantillonné et leur applique un algorithme approprié fournissant l'estimation souhaitée de la fréquence de balayage.

FIG.1

FIG. 2